# EUROPÄISCHE PATENTSCHRIFT

(11) **EP 1 907 193 B1**
(45) Veröffentlichungstag und Bekanntmachung des Hinweises auf die Patenterteilung: **02.03.2011**
(21) Anmeldenummer: 06724058.0
(22) Anmeldetag: 05.04.2006
(51) Int. Cl.: B29C 70/24, B29C 70/08

(54) **FERTIGUNGSVERFAHREN ZUR ARMIERUNG VON KERNMATERIALIEN FÜR KERNVERBUNDE**
METHOD FOR PRODUCING A CORE MATERIAL REINFORCEMENT FOR SANDWICH STRUCTURES
PROCEDE DE PRODUCTION D'ARMATURE DE MATERIAUX AMES DESTINES A DES STRUCTURES SANDWICHS A AMES

(30) Priorität: 27.07.2005 DE 102005035681
(43) Veröffentlichungstag der Anmeldung: 09.04.2008
(73) Patentinhaber: Evonik Röhm GmbH, 84/339 Hanau (DE)
(72) Erfinder: ROTH, Matthias, Alexander, 64247 Griesheim (DE)
(86) Internationale Anmeldenummer: PCT/EP2006/003110
(87) Internationale Veröffentlichungsnummer: WO 2007/012353

(56) Entgegenhaltungen:
- GB-A- 2 245 862
- US-A- 5 741 574
- US-A- 5 935 680
- US-A1- 2006 006 023
- INTERNET CITATION, [Online] Gefunden im Internet: <URL:http://de.wikipedia.org/wiki/Nähmaschi ne>
- INTERNET CITATION, [Online] Gefunden im Internet: <URL:http://de.wikipedia.org/wiki/Greifsyst em>

## Beschreibung

### Technisches Gebiet der Erfindung

Die Erfindung betrifft ein Armierungsprozess für Kernver bunde.

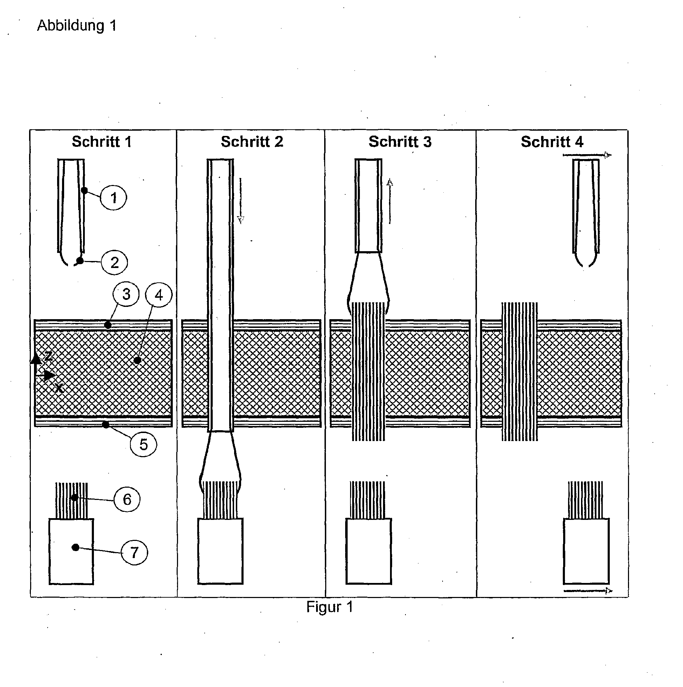

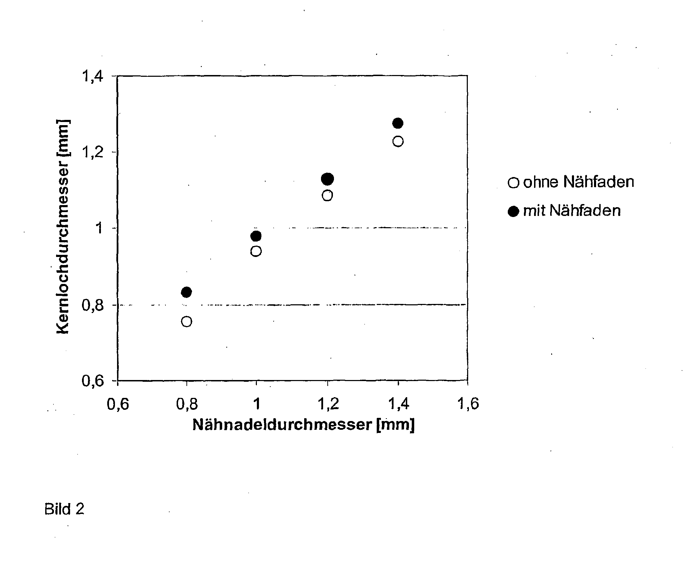

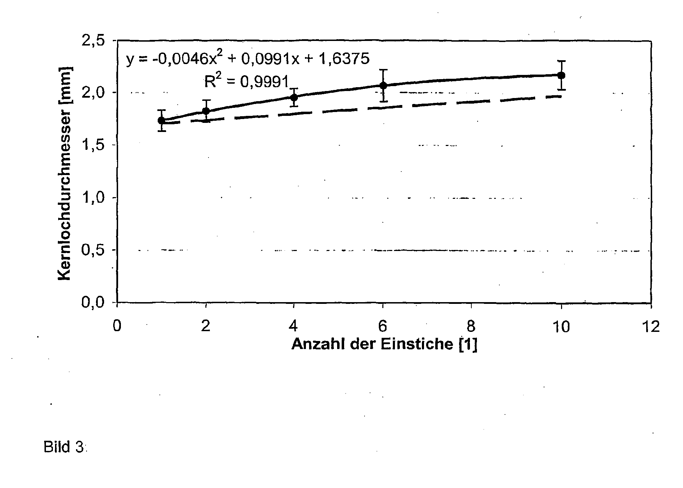

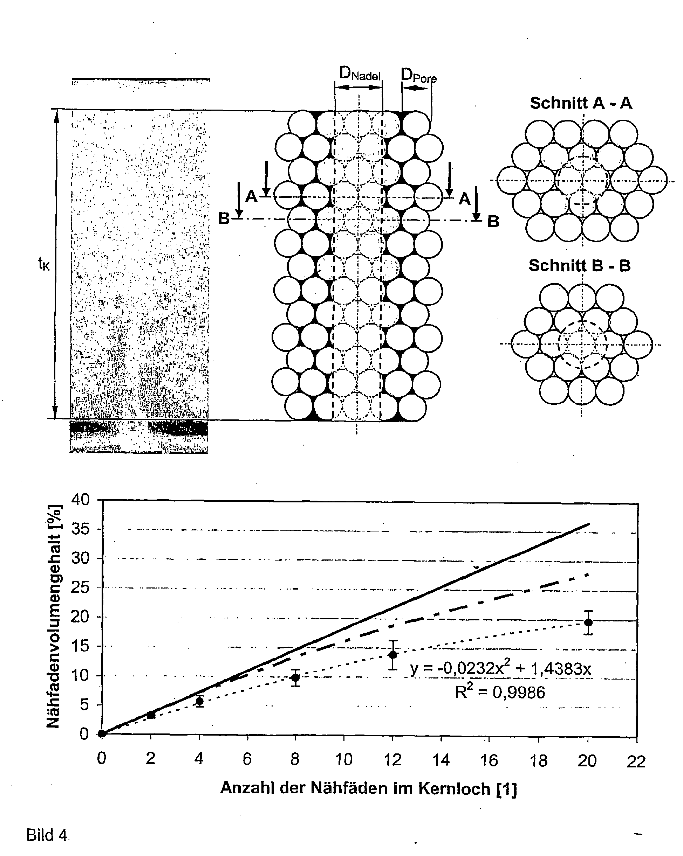

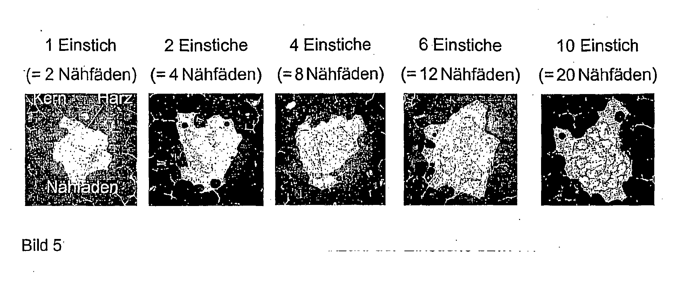

Die Erfindung eignet sich zur Armierung von Kernverbund-Strukturen. Die Kernverbund-Struktur kann vorzugsweise aus Faser-Kunststoff-Verbund mit Deckschichten aus textilen Halbzeugen (Figur 1; 3 und 5, z.B. Gewebe, Gelege, Matten, etc.), einem Kernmaterial (Figur 1; 4, z. B. polymerer Schaumstoff) und einem polymeren Matrixwerkstoff (Thermoplast oder Duromer) bestehen. Kernverbunde sind schichtweise aufgebaute Strukturen, die aus relativ dünnen oberen (Figur 1; 3) und unteren Deckschichten (Figur 1; 5) sowie aus einer relativ dicken Kernschicht (Figur 1; 4) niedriger Rohdichte bestehen.

Mit Hilfe dieser Erfindung können die transversalen (z. B. Druck- bzw. Zugsteifigkeit und -festigkeit in z-Richtung, Schubsteifigkeit und -festigkeit in xz- und yz-Ebene, Schälwiderstand zwischen Deckschicht und Kern, Fail-Safe-Verhalten) und auch die in-plane mechanischen Eigenschaften von Kernverbundstrukturen (z. B. Steifigkeit und Festigkeit in Richtung der Plattenebene) mit Hilfe von in Dickenrichtung durchsetzenden Armierungselementen deutlich gesteigert werden.

### Stand der Technik

Alle bisher bekannten Fertigungsverfahren zur Armierung von Kernverbund-Strukturen in Dickenrichtung gemäß dem Oberbegriff des Anspruchs 1, wie z. B. die Doppelsteppstich-, Blindstich- oder Zweinadel-Nähtechnik sowie das Tufting-Verfahren, haben gemeinsam, dass die Armierungselemente (z. B. Nähfaden, Rovings) gemeinsam mit der Nadel in die Kernverbund-Struktur eingebracht werden wie zum Beispiel im US-A-2005/0006023 offenbart wird. Bei herkömmlichen textilartigen Nähgütern stellt das Eindringen der Nadel einschließlich Nähfaden und das anschließende Herausziehen der Nähnadel und das Hinterlassen des Nähfadens im Nähloch aufgrund der Rückstellwirkung der Textilien in der Regel kein Problem dar. Jedoch kommt es bei Kernverbund-Strukturen mit einem polymeren Hartschaumstoff als Kernmaterial durch das Eindringen der Nadel einschließlich Nähfaden zu einer Zerstörung der zellartigen Struktur und zu einer Verformung des polymeren Hartschaumstoffs infolge plastischer und elastischer Deformation auf die Größe des Nähnadeldurchmessers.

Nach dem Herausziehen der Nähnadel und dem Hinterlassen des Nähfadens im Nähloch kommt es zu einer Reduzierung des Durchgangslochs aufgrund der elastischen Verformungsanteile der Zellwände, wodurch der Kernlochdurchmesser wieder kleiner als der Nähnadeldurchmesser wird (siehe Bild 2). Zwischen dem entstehenden Durchmesser des Durchgangslochs im Kern und dem verwendeten Nähnadeldurchmesser besteht eine nahezu lineare Abhängigkeit (Bild 2), d. h. je größer der Nähnadeldurchmesser, umso größer auch das resultierende Durchgangsloch im Kern. Des Weiteren sorgt der Nähfaden zu einer zusätzlichen Aufweitung des Kernlochdurchmessers. Diese zusätzliche Aufweitung entspricht ungefähr der Querschnittsfläche des Nähfadens (Bild 2). Auch hier gilt, je größer die Querschnittsfläche des verwendeten Nähfadens, umso größer die zusätzliche Aufweitung.

Nach der Imprägnierung der Kernverbund-Struktur mit dem flüssigen Matrixwerkstoff und anschließender Aushärtung kann mithilfe mikroskopischer Untersuchungen der Kernlochdurchmesser sowie der Faservolumengehalt des Nähfadens im Kernloch bestimmt werden. Hierbei zeigen experimentelle Untersuchungen an mit Hilfe der Doppelsteppstich-Nähtechnologie und unter Verwendung einer Nähnadel mit einem Durchmesser von 1,2 mm und einem Aramidfaden mit einem Liniengewicht von 62 g/km vernähten Kernverbund-Strukturen, dass der Durchmesser der entstehenden Harzsäule im Kernmaterial (ca. 1,7 mm) größer ist als der ermittelte Kernlochdurchmesser einer nicht imprägnierten Kernverbund-Struktur (ca. 1,1 mm; vergleiche Bilder 2 und 3) bei einmaligem Einstich. Der Grund hierfür ist, dass durch das Einstechen der Nähnadel benachbarte Zellwände im Bereich des Nähnadeldurchmessers zerstört werden. In diese nun offenen Poren mit einem mittleren Durchmesser von ca. 0,7 mm kann im anschließenden Infiltrationsprozess Harz eindringen (Bild 4).

Bei Einsatz der Doppelsteppstich-Nähtechnik werden stets pro Einstich zwei Nähfäden in z-Richtung der Kernverbund-Struktur eingebracht (siehe Bilder 4 und 5). Um den Nähfadenvolumengehalt innerhalb eines Durchgangslochs und somit die Armierungswirkung zu erhöhen, können bereits vernähte Stellen nochmals bzw. mehrmals vernäht werden. Jedoch können hierbei bereits im Kernloch befindliche Nähfäden durch das erneute Einstechen der Nähnadel beschädigt werden. Mithilfe von mikroskopischen Untersuchungen kann festgestellt werden, dass der Nähfadenvolumengehalt nicht proportional zur Anzahl der Einstiche gesteigert werden kann, wie dies zu erwarten wäre (Bilder 3, 4 und 5). Grund hierfür ist, dass der Durchmesser des Kernlochs mit zunehmender Anzahl der Einstiche und der eingebrachten Nähfäden nicht konstant bleibt, da sich der Kernlochdurchmesser durch das zusätzliche Einbringen von Nähfäden um ungefähr die Fadenquerschnittfläche vergrößert (Bild 3, gestrichelte Kurve). Jedoch wird ebenfalls noch festgestellt, dass der wahre Kurvenverlauf (Bild 3, durchgehende Kurve) dieser Theorie erst bei einer sehr hohen Anzahl an Einstichen nachkommt. Dagegen vergrößert sich der Durchmesser des Kernlochs bei einer geringen Anzahl an Einstichen übermäßig stark. Grund hierfür ist die Positioniergenauigkeit der Nähmaschine. Wird eine Position, die nochmals vernäht werden soll, erneut angefahren, so sticht die Nähnadel nicht genau zentrisch in das bereits vorhandene Loch sondern im Rahmen der Positioniergenauigkeit ein wenig daneben, wodurch sich das Kernloch überproportional vergrößert. Nach etwa achtmaligem Einstechen in dasselbe Kernloch ist dieses bereits so stark aufgeweitet, dass die Nähnadel in das vorhandene Loch ohne zusätzliche Zerstörung von Zellenwänden trifft. Bei weiteren Einstichen erfolgt die Aufweitung nur noch durch die zusätzlich eingebrachten Nähfäden. In Bild 4 und 5 ist die mögliche Steigerung des Nähfadenvolumengehalts mit zunehmender Anzahl an Nähfäden im Kernloch dargestellt. Die schwarze Kurve in Bild 4 beschreibt die proportionale Steigerung des Nähfadenvolumengehalts bei konstantem Kernlochdurchmesser, die schwarze strich-punktierte Kurve nach der oben genannten Theorie exakter Positioniergenauigkeit und der zusätzlichen Aufweitung des Kernlochdurchmessers infolge der eingebrachten Nähfäden und die gepunktete Kurve beschreibt den wahren Verlauf des Nähfadenvolumengehalts mit zunehmender Anzahl an Nähfäden bzw. Einstichen. Bei einmaligem Einstechen kann lediglich ein Faservolumengehalt von ca. 3,2 % erzielt werden, der durch bis zu 10-maliges Einstechen nur auf ca. 20 % erhöht werden kann (siehe Bilder 4 und 5). Der Faservolumengehalt eines einzelnen Nähfadenstrangs beträgt hingegen ca. 58 % (siehe Bild 5).

Anhand dieser Untersuchungen wird deutlich, dass der entstehende Durchmesser im polymeren Kernmaterial bei Einsatz herkömmlichere Fertigungsverfahren (z. B. Doppelsteppstich-Nähtechnik) hauptsächlich durch den verwendeten Nähnadeldurchmesser, die Querschnittsfläche des Nähfadens sowie durch den Porendurchmesser des eingesetzten polymeren Hartschaumstoffs abhängt. Da bei allen bislang bekannten Armierungsverfahren Nähnadel und Nähfaden gleichzeitig in die Kernverbund-Struktur einstechen, kommt es hierbei immer zu einem ungünstigen Verhältnis von eingebrachter Querschnittsfläche der Armierungselemente zur Größe des Kernlochdurchmessers. Hohe Faservolumengehalte im Kernlochdurchmesser, ähnlich hoch wie der Faservolumengehalt der Deckschichten (> 50 %), lassen sich somit mit konventionellen Armierungsverfahren nicht erzielen. Da jedoch die mechanischen Eigenschaften hauptsächlich durch die eingebrachten hochsteifen und -festen Armierungselemente beeinflusst werden, muss es das Ziel sein, einen möglichst hohen Faservolumengehalt der Armierung im Kernlochdurchmesser anzustreben. Des Weiteren sorgt der hohe Harzanteil im Kernlochdurchmesser für eine Erhöhung des Gewichts, welches im Speziellen in der Luft- und Raumfahrt nicht toleriert wird.

### Aufgabe

Der Erfindung liegt die Aufgabe zu Grunde, die mechanischen Eigenschaften von Kernverbund-Strukturen durch Einbringen von Armierungselementen in Dickenrichtung der Kernverbund-Struktur (z-Richtung) zu verbessern, wobei die Möglichkeit besteht, einen hohen Faservolumgehalt der Armierung im Kernlochdurchmesser zu erzielen. Ferner soll durch die Einbringung der Armierungselemente in die Kernverbund-Struktur das Gewicht nicht allzusehr negativ beeinflusst werden. Diese neuartige Nähtechnik kann ebenfalls zum Preformen als auch zum Befestigen von zusätzlichen Bauteilkomponenten (z. B. Stringer, Spante etc.) an die Kernverbund-Struktur verwendet werden.

### Lösung

Diese Aufgabe wird dadurch gelöst, dass das Einbringen eines notwendigen Durchgangsloches im Kernmaterial und das Einbringen der Armierungsstruktur zeitlich voneinander getrennt stattfindet, wodurch der Faservolumengehalt der Armierung im Kernlochdurchmesser durch die verwendete Querschnittsfläche des Nähfadens eingestellt werden kann. Figur 1 verdeutlicht die zugrunde liegende Erfindung und Gestaltung einer solch artig armierten Kernverbund-Struktur. Ein Greifersystem (1) sticht einseitig von einer Seite der Kernverbundstruktur (Schritt 1 und 2) in den Kernwerkstoff (4) und optional durch die obere (3) und untere textile Deckschicht (5) ein (Schritt 2) und nimmt mit Hilfe eines Greifers (2) auf der gegenüberliegende Seite eine Armierungsstruktur (6), z. B. Nähfaden, pultrudierte faserkunstoffverstärkte Stäbe, die über eine Einrichtung (7) zugeführt, wird, auf (Schritt 2) und bringt die Armierungsstruktur während der Rückwärtsbewegung in die Kernverbund-Struktur ein (Schritt 3). Im anschließenden Prozessschritt bewegt sich das Greifersystem (1) aufwärts und zieht die Armierungsstruktur in den Kern bzw. in die Kernverbund-Struktur (Schritt 3).

Als Kernwerkstoff (4) kann ein polymerer Hartschaumstoff (z. B. PMI, PVC, PEI, PU etc.) angewendet werden. Der Kernwerkstoff (4) kann eine Dicke bis zu 150 mm, eine Breite von ca. 1250 mm und eine Länge von 2500 mm aufweisen. Die obere (3) und die untere (5) textile Deckschicht kann gleich oder verschieden aufgebaut sein und aus Glas, Kohlenstoff, Aramid oder anderen Verstärkungsmaterialien bestehen. Die Dicke einer einzelnen textilen Deckschichtlage kann gleich oder verschieden sein und zwischen 0,1 mm und 1,0 mm liegen. Als polymerer Matrixwerkstoff können Thermoplaste oder Duromere verwendet werden.

Die Armierungsstruktur (6) kann sowohl aus textilen Verstärkungsstrukturen (z. B. Nähfäden, Rovings) oder aus stabförmigen Elementen (z. B. Pins aus unidirektionalem Faser-Kunststoff-Verbund, unverstärktem Kunststoff oder Metall etc.) bestehen. Typische Durchmesser der Armierungsstruktur (6) können 0,1 mm bis 2,0 mm sein.

Im anschließenden Prozessschritt wird das Nähgut oder die Armierungseinheit zur nächsten Einstichposition weitertransportiert und der Armierungsprozess wiederholt sich dann dort. Zusätzlich kann die zugeführte Armierungsstruktur abgelängt werden, so dass keine Verbindung von einem Einstich zum anderen besteht. Die Ablängung kann durch alle gebräuchlichen technischen Mittel erfolgen, wie beispielsweise durch abschneiden oder abflämmen. Durch das Einziehen der Armierungsstruktur kann es zu einer zusätzlich Aufweitung des durch das Einstechen des Greifersystems entstehenden Kernlochdurchmessers kommen, wodurch ein hoher Faservolumengehalt realisiert werden kann. Da die Armierungselemente durch Zug in die Kernverbundstruktur bzw. nur in den Kernwerkstoff eingebracht werden, kommt es zu einer sehr guten Ausrichtung und zu keinen Ausknicken der Verstärkungsstruktur. Mit Hilfe dieses Armierungsverfahrens können die eingebrachten Armierungselemente ebenfalls einen von 0° zur z-Achse abweichenden Winkel aufweisen, z. B. +/- 45° bei reiner Querkraftbeanspruchung.

Der Einsatz von erfindungsgemäß in Dickenrichtung verstärkten Kernverbund-Strukturen kann im Transportbereich, wie z. B. Luft- und Raumfahrt, Kraft- und Schienenfahrzeugbau sowie Schiffsbau, aber auch im Sport- und Medizinbereich sowie im Bauwesen Anwendung finden.

Nach dem Armierungsprozess kann die Kernverbund-Struktur in einem Liquid-Composite-Moulding-Verfahren mit einem duromeren oder thermoplastischen Matrixwerkstoff imprägniert werden.

### Bezugszeichenliste

| **Nummer** | **Bezeichnung** |
|---|---|
| 1 | Greifers system |
| 2 | Greifer |
| 3 | obere textile Deckschicht |
| 4 | Kernwerkstoff |
| 5 | untere textile Deckschicht |
| 6 | Armierungsstruktur |
| 7 | Einrichtung zur Zuführung der Armierungselemente (6) |

- Bild 1:: Armierungsprozess
- Bild 2:: Einfluss des Nähnadeldurchmessers auf den entstehenden Kernlochdurchmesser bei einmaligem Einstich unter Verwendung der Doppelsteppstich-Nähtechnologie
- Bild 3:: Abhängigkeit zwischen der Anzahl der Einstiche und dem Kernlochdurchmesser bei Verwendung einer Nähnadel mit einem Durchmesser von 1,2 mm einschließlich des Nähfadens unter Verwendung der Doppelsteppstich-Nähtechnologie
- Bild 4:: Mechanismus der entstehenden Harzsäule unter Verwendung der Doppelsteppstich-Nähtechnologie und Abhängigkeit des Nähfadenvolumengehalt innerhalb eines Kernloches von der Anzahl der Nähfäden im Kernloch
- Bild 5:: Abhängigkeit zwischen Anzahl der Einstiche bzw. Nähfäden und dem Fadenvolumengehalt im Kernloch unter Verwendung der Doppelsteppstich-Nähtechnologie

## Patentansprüche

1. Armierungsprozess für Kernverbunde,
**dadurch gekennzeichnet, dass**
ein Greifersystem (1) von einer Seite der Struktur in den Kernwerkstoff (4) oder in den durch mit Deckschichten applizierten Kernwerkstoff (3 ,4) einsticht, auf der gegenüberliegenden Seite eine Armierungsstruktur (6) mit einem Greifer (2) greift und in den Kernwerkstoff (4) oder in den durch mit Deckschichten applizierten Kernwerkstoff (3 ,4) durch eine Rückwärtsbewegung einbringt.

2. Armierungsprozess für Keenverbunde nach Anspruch 1,
**dadurch gekennzeichnet, dass**,
die Armierungsstruktur (6) aus textilartigen Verstärkungsstrukturen oder stabförmige Elemente besteht.

3. Armierungsprozess für Kernverbunde nach einem der Ansprüche 1 bis 2,
**dadurch gekennzeichnet, dass**
die Deckschichten (3) aus textilen Halbzeugen, die Kernschicht (4) aus polymerem, natürlichem oder strukturiertem Kernwerkstoff bestehen und dass die Deckschichten, die Kernschicht und die Armierungselemente in einem polymeren Matrixwerkstoff eingebettet sind.

4. Verfahren nach einem der Ansprüche 1 bis 3,
**dadurch gekennzeichnet, daß**
man die Armierungsstruktur (6) nach dem Einbringen in den Kernwerkstoff (4) oder in den durch mit Deckschichten applizierten Kernwerkstoff (3 ,4) nicht ablängt.

5. Verfahren nach einem der Ansprüche 1 bis 3,
**dadurch gekennzeichnet, daß**
man die Armierungsstruktur (6) nach dem Einbringen in den Kernwerkstoff (4) oder in den durch mit Deckschichten applizierten Kernwerkstoff (3 ,4) ablängt.

## Claims

1. Reinforcing process for core composites, **characterized in that** a gripper system (1) makes an insertion from one side of the structure into the core material (4) or into the core material with cover layers applied (3, 4), on the opposite side grips a reinforcing structure (6) with a gripper (2) and, by a backward movement, introduces it into the core material (4) or into the core material with cover layers applied (3, 4).

2. Reinforcing process for core composites according to Claim 1, **characterized in that** the reinforcing structure (6) comprises textile-like strengthening structures or elements in bar form.

3. Reinforcing process for core composites according to either of Claims 1 and 2, **characterized in that** the cover layers (3) consist of textile semifinished products, the core layer (4) of polymeric, natural or textured core material and **in that** the cover layers, the core layer and the reinforcement elements are embedded in a polymeric matrix material.

4. Method according to one of Claims 1 to 3, **characterized in that** the reinforcing structure (6) is not cut to length after introduction into the core material (4) or into the core material with cover layers applied (3, 4).

5. Method according to one of Claims 1 to 3, **characterized in that** the reinforcing structure (6) is cut to length after introduction into the core material (4) or into the core material with cover layers applied (3, 4).

## Revendications

1. Procédé de renforcement pour composites à noyau, **caractérisé en ce qu'**un système à grappin (1) pénètre depuis un côté de la structure dans le matériau à noyau (4) ou dans le matériau à noyau sur lequel des couches de surface sont appliquées (3, 4), accroche du côté opposé une structure de renforcement (6) avec un grappin (2) et l'introduit dans le matériau à noyau (4) ou dans le matériau à noyau sur lequel des couches de surface sont appliquées (3, 4) par un mouvement arrière.

2. Procédé de renforcement pour composites à noyau selon la revendication 1, **caractérisé en ce que** la structure de renforcement (6) est constituée de structures de renforcement de type textile ou d'éléments en forme de baguette.

3. Procédé de renforcement pour composites à noyau selon l'une quelconque des revendications 1 à 2, **caractérisé en ce que** les couches de surface (3) sont constituées de semi-finis textiles, la couche de noyau (4) d'un matériau de noyau polymère, naturel ou structuré, et **en ce que** les couches supérieures, la couche de noyau et les éléments de renforcement sont incorporés dans un matériau de matrice polymère.

4. Procédé de renforcement pour composites à noyau selon l'une quelconque des revendications 1 à 3, **caractérisé en ce que** la structure de renforcement (6) n'est pas sectionnée après l'introduction dans le matériau à noyau (4) ou dans le matériau à noyau sur lequel des couches supérieures sont appliquées (3, 4).

5. Procédé de renforcement pour composites à noyau selon l'une quelconque des revendications 1 à 3, **caractérisé en ce que** la structure de renforcement (6) est sectionnée après l'introduction dans le matériau à noyau (4) ou dans le matériau à noyau sur lequel des couches supérieures sont appliquées (3, 4).
